# EUROPÄISCHE PATENTSCHRIFT

(11) **EP 3 452 325 B1**
(45) Veröffentlichungstag und Bekanntmachung des Hinweises auf die Patenterteilung: **14.08.2024**
(21) Anmeldenummer: 17716210.4
(22) Anmeldetag: 07.04.2017
(51) Int. Cl.: B60K 15/03

(54) **TANKSYSTEM EINES KRAFTFAHRZEUGS MIT EINEM VOLUMENVERÄNDERUNGSELEMENT**
TANK SYSTEM OF A MOTOR VEHICLE COMPRISING A VOLUME-MODIFYING ELEMENT
SYSTÈME DE RÉSERVOIR D'UN VÉHICULE AUTOMOBILE MUNI D'UN ÉLÉMENT DE MODIFICATION DU VOLUME

(30) Priorität: 04.05.2016 DE 102016207741
(43) Veröffentlichungstag der Anmeldung: 13.03.2019
(73) Patentinhaber: Bayerische Motoren Werke Aktiengesellschaft, 80809 München (DE)
(72) Erfinder: BAUER, Martin, 85399 Hallbergmoos (DE); BRATER, Markus, 84163 Marklkofen (DE); ARRAS, Emmanuel, 80637 München (DE)
(86) Internationale Anmeldenummer: PCT/EP2017/058333
(87) Internationale Veröffentlichungsnummer: WO 2017/190912

(56) Entgegenhaltungen:
- WO-A1-2016/012284
- DE-A1- 102007 014 849
- DE-A1- 102008 046 586
- US-A- 5 460 135
- US-A1- 2011 005 609
- US-A1- 2013 075 394

## Beschreibung

Die Erfindung betrifft ein Tanksystem eines Kraftfahrzeugs mit einem im Innenraum des Kraftstofftanks zumindest im Wesentlichen oberhalb des Flüssigkeitsspiegels vorgesehenen Volumenveränderungselement, welches ein mit der Umgebung in Verbindung stehendes Ausgleichs-Volumen bildet, wie aus der WO 2016/012284 bekannt.

Die Druckschriften WO 2016/012284 A1, DE 10 2008 046 586 A1, US 5 460 135 A, DE 10 2007 014 849 A1, US 2011/005609 A1 und US 2013/075394 A1 zeigen Stand der Technik.

Der technologische Hintergrund eines Kfz-Tanksystems mit einem sog. Volumenveränderungselement ist ebenso wie eine vorteilhafte Ausgestaltung eines solchen Tanksystems in der vorstehend genannten Schrift ausführlich beschrieben. Es ist Aufgabe der Erfindung eine Maßnahme zur Eliminierung eines Einflusses des Volumenveränderungselements auf das maximale Füllstandniveau des Tanks bereitzustellen.

Die Erfindung ist in Anspruch 1 definiert.

Verschiedene mögliche Maßnahmen sind Inhalt der abhängigen Ansprüche.

Es wurde erkannt, dass sich ein im Tank-Innenraum vorgesehenes und mit der Umgebung in Verbindung stehendes Volumenveränderungselement beim Befüllen des Kraftstofftanks mit Kraftstoff auf das maximale Füllstand-niveau im Kraftstofftank auswirken kann. Letzteres wird (nämlich) üblicherweise durch eine schwimmergesteuerte Ventilanordnung bestimmt, wobei durch die zunächst offene Ventilanordnung Luft bzw. Gase, welche sich zunächst im Kraftstofftank befindet bzw. befinden und die beim Befüllen des Tanks durch den eingebrachten Kraftstoff verdrängt wird/werden, aus dem Tank-Innenraum abgeführt wird bzw. werden. Sobald nun beim Befüllen der Füllstand im Kraftstoff ein bestimmtes Niveau erreicht hat, wird der Schwimmer der besagten Ventilanordnung angehoben und bewirkt ein Schließen der Ventilanordnung. Da danach keine weitere Luft bzw. Gase aus dem Tank-Innenraum abgeführt werden kann/können, entsteht mit weiterer Kraftstoffzufuhr ein geringer Überdruck und somit Gegendruck im Einfüllrohr des Kraftstofftanks, welcher von der Tank-Zapfpistole erkannt wird und ein automatisches Abschalten der Kraftstoffzufuhr bewirkt.

Mit einem im Tank-Innenraum vorgesehenen Volumenveränderungselement hingegen schließt zwar weiterhin die genannte schwimmergesteuerte Ventilanordnung bei Erreichen des genannten bestimmten Füllstandniveaus, jedoch entsteht bei danach weiterer Kraftstoffzufuhr zunächst einmal kein Überdruck, sondern es wird Luft aus dem Volumenveränderungselement in die Umgebung verdrängt, welche sich zuvor, nämlich bei bspw. nur zu einem Viertel gefülltem Kraftstofftank, darin befunden hat. Damit kann nach Schließen der besagten Ventilanordnung noch weiterer Kraftstoff in den Kraftstofftank eingefüllt werden, was grundsätzlich unerwünscht ist, da dies zu einer Überfüllung des Kraftstofftanks führt. Daher wird erfindungsgemäß vorgeschlagen, mittels einer geeigneten Maßnahme eine Einflussnahme des Volumenveränderungselements auf das maximale Füllstandniveau zu verhindern, d.h. einen solchen Einfluss zu eliminieren.

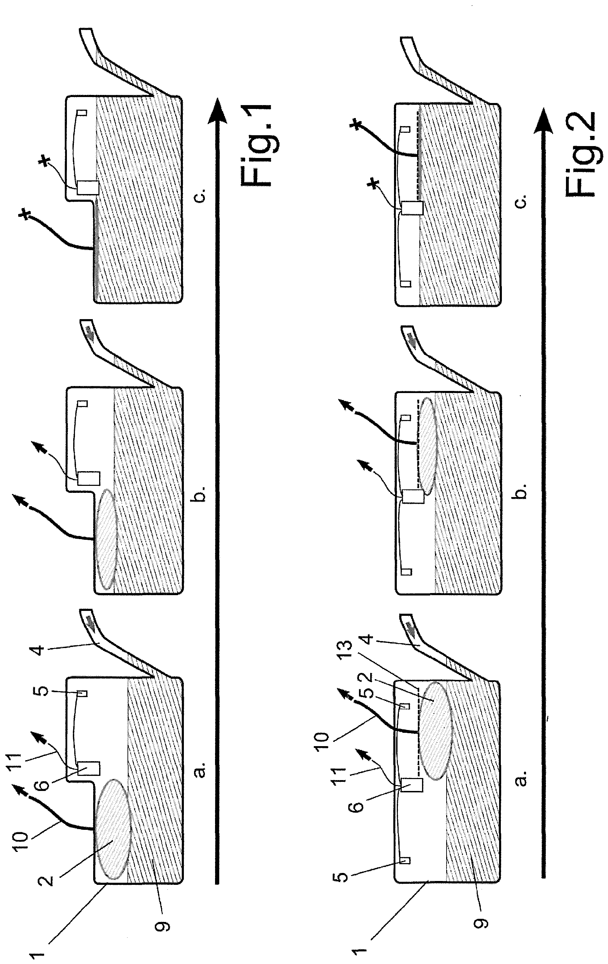

Eine erste mögliche solche Maßnahme sieht vor, dass das Volumenveränderungselement solchermaßen im Kraftstofftank angeordnet ist, dass sich bei auf horizontalem Untergrund stehendem Fahrzeug in Hochachsrichtung betrachtet die Oberseite des Volumenveränderungselements nicht nennenswert oberhalb desjenigen Kraftstofffüllstandes befindet, bei welchem die besagte Ventilanordnung schließt. Hiermit ist also gewährleistet, dass bei einem Befüllvorgang des Kraftstofftanks zum Zeitpunkt des Schließens der besagten schwimmergesteuerten Ventilanordnung das Volumen des Volumenveränderungselements bereits minimal ist, da bereits vor dem Zeitpunkt des Schließens der Ventilanordnung die zuvor darin enthaltene Luft aus dem Ausgleichsvolumen vom ansteigenden Kraftstoffpegel verdrängt wurde. Dabei kann diese erste vorgeschlagene Maßnahme ihrerseits auf unterschiedliche Arten dargestellt sein, welche nun des besseren Verständnisses wegen unter Bezugnahme auf die beiden beigefügten **Figuren 1, 2** erläutert werden. Jede dieser Figuren 1, 2 ist in sich als eine Figurenfolge dargestellt, bestehend aus drei einzelnen mit den Zusatz-Buchstaben a, b, c gekennzeichneten schematischen Darstellungen eines Kraftstofftanks eines erfindungsgemäßen Tanksystems eines Kraftfahrzeugs. Dabei zeigen die einzelnen Darstellungen a, b, c aufeinander folgend die Verhältnisse bei unterschiedlichen Füllständen oder Kraftstoff-Pegeln während eines Befüllvorganges und in sämtlichen Figuren sind gleiche Elemente mit den gleichen Bezugsziffern gekennzeichnet - der besseren Übersichtlichkeit halber in der Figuren 1, 2 jedoch nur in deren Darstellungen 1a, 2a.

Somit zunächst auf die Figuren 1a, 1b, 1c Bezug nehmend ist mit der Bezugsziffer 1 ein Kraftstofftank gekennzeichnet, der über einen Befüllstutzen 4 wie üblich mit Kraftstoff befüllt werden kann. Der Kraftstofftank 1 ist zusammen mit einer darin befindliche Kraftstoffmenge 9 in einer Gebrauchsstellung dargestellt, bei welcher ein diesen Kraftstofftank 1 aufweisendes (nicht gezeigtes) Kraftfahrzeug auf horizontalem Untergrund steht, so wie dies beim Befüllen des Kraftstofftanks 1 üblich ist. Eine Hochachse (des Tanks 1 bzw. des Fahrzeugs) erstreckt sich somit in der Zeichenebene auf dem jeweiligen horizontalen von a nach c weisenden Pfeil senkrecht stehend von unten nach oben.

Im Tank-Innenraum ist ein Volumenveränderungselement 2 vorgesehen, dessen Funktion und mögliche Ausgestaltung in der eingangs genannten WO 2016/012284 ausführlich beschrieben ist. Das innerhalb dieses Volumenveränderungselements 2 liegende sog. Ausgleichsvolumen des Volumenveränderungselements 2 ist über eine eigene sog. Ausgleichs-Entlüftungsleitung 10 praktisch kontinuierlich mit der Umgebung verbunden. Weiterhin ist im Innenraum des Kraftstofftanks 1 in der genannten Hochachsrichtung relativ weit oben liegend eine schwimmergesteuerte Ventilanordnung 6 vorgesehen, über die eine den Innenraum des Kraftstofftanks 1 mit der Umgebung verbindende Tankentlüftungsleitung 11 absperrbar ist bzw. dann durch ein Ansteigen eines bzw. des Schwimmers der Ventilanordnung 6 abgesperrt wird, wenn mit (gemäß den Einzel-Darstellungen a, b, c) ansteigendem Kraftstoff-Füllstand 9 ein maximales Füllstand-Niveau, welches in der Einzel-Darstellung c dargestellt ist, erreicht ist. An die Ventilanordnung 6 ist wie üblich noch eine gängige Roll-Over-Ventilanordnung 5 angekoppelt, durch welche bei geschlossener Ventilanordnung 6 notfalls eine Belüftung des Kraftstofftanks 1 erfolgen könnte. Zur Klarstellung sei in diesem Zusammenhang erwähnt, dass die vorliegende Tankentlüftungsleitung 11 dem in der eingangs genannten WO 2016/012284 bspw. in deren Fig.1 dort unter der Bezugsziffer 6 dargestelltem Abschnitt der dortigen Tankentlüftungsleitung zwischen dem dortigen Kraftstofftank 1 und der dortigen Ventileinheit 7 entspricht.

Gemäß der in der vorliegenden **Figurenfolge 1 (1a, 1b, 1c)** dargestellten Maßnahme zur Eliminierung einer Einflussnahme des Volumenveränderungselements 2 auf das maximale Füllstandniveau 9 in Fig.1c ist - wie bereits gesagt - das Volumenveränderungselement 2 solchermaßen im Kraftstofftank 1 angeordnet, dass sich bei auf horizontalem Untergrund stehendem Fahrzeug in Hochachsrichtung betrachtet die Oberseite des Volumenveränderungselements 2 nicht nennenswert oberhalb desjenigen Kraftstofffüllstandes befindet, bei welchem die besagte Ventilanordnung 6 schließt. Konkret ist hierfür der Kraftstofftank 1 solchermaßen geformt, dass in Hochachsrichtung betrachtet die Innenseite der oberen Tankwand dort, wo das Volumenveränderungselement 2 angeordnet ist, um ein ausreichendes Maß niedriger liegt als im Bereich der schwimmergesteuert schließenden Ventilanordnung 6. In anderen Worten ausgedrückt ist die obenliegende Tankwand abgestuft ausgeführt, so dass sich in Hochachsrichtung betrachtet oberhalb des Volumenveränderungselements 2 abseits desselben noch ein ausreichend großes Innenraum-Volumen des Kraftstofftanks 1 befindet, in welchem dann die schwimmergesteuerte Ventilanordnung 6 vorgesehen ist. Dieses soeben genannte oberhalb des Volumenveränderungselements 2 vorgesehene und ausreichend große Innenraum-Volumen sollte zumindest derart groß sein, dass darin das bei einem bis zum maximalen Füllstandniveau befüllten Kraftstofftank **1** für dessen Funktionssicherheit erforderliche Gasvolumen vorliegt.

Nun auf die (vorliegende) **Figurenfolge 2a** - **2c** eingehend ist hier im Innenraum des Kraftstofftanks 1 eine sog. Rückhaltevorrichtung 13 vorgesehen, welche das Volumenveränderungselement 2 in Hochachsrichtung betrachtet weiter unten hält als sich dieses Volumenveränderungselement 2 ohne eine solche Rückhaltevorrichtung 13 im Innenraum befinden würde. Dabei hält die Rückhaltevorrichtung 13 das Volumenveränderungselement 2 solchermaßen, dass dieses daran gehindert ist, in Hochachsrichtung betrachtet nennenswert höher zu liegen als derjenige Kraftstofffüllstand, bei welchem die schwimmergesteuerte Ventilanordnung 6 schließt. Beispielsweise kann die Rückhaltevorrichtung 13 als flächiges und vorzugsweise mit Durchbrüchen bzw. Durchtrittsöffnungen für Kraftstoff versehenes Blech ausgebildet sein, welches (bzw. welche) horizontal liegend annähernd im Bereich der Unterkante der schwimmergesteuerten Ventilanordnung 6 geeignet im Innenraum des Kraftstofftanks 1 aufgehängt bzw. an Seitenwänden des Kraftstofftanks 1 befestigt ist. Die Fläche eines solchen blechartigen Rückhalteelements 13 entspricht dabei im Wesentlichen der auf eine Horizontalebene projizierten "Grundfläche" des mit Luft gefüllten Volumenveränderungselements 2. Wie die Figurenfolge 2a bis 2c eindrucksvoll zeigt, wird das Ausgleichs-Volumen des Volumenveränderungselements 2 bei einem Befüllen des Kraftstofftanks 1 durch den ansteigenden Kraftstoff-Pegel 9 fortlaufend verringert ist minimiert, wenn gemäß Fig.2c die schwimmergesteuerte Ventilanordnung 6 schließt.

Eine weitere Maßnahme zur Eliminierung einer Einflussnahme des Volumenveränderungselements 2 auf das maximale Füllstandniveau wird nun ohne direkte Bezugnahme auf eine Figurendarstellung erläutert. Demnach sind eine bzw. die von der schwimmergesteuerten Ventilanordnung (6) in die Umgebung führende Tankentlüftungsleitung (11) und eine bzw. die das Ausgleichs-Volumen des Volumenveränderungselements (2) mit der Umgebung verbindende Ausgleichs-Entlüftungsleitung (10) solchermaßen ausgelegt bzw. dimensioniert, dass bei einem gleichen Luftvolumenstrom von kleiner oder gleich 60 Litern pro Minute in diesen Entlüftungsleitungen (10, 11) der Druckabfall in der Ausgleichs-Entlüftungsleitung (10) maximal halb so groß ist wie derjenige in der Tankentlüftungsleitung (11). Damit ist jedenfalls bei üblich dimensionierten Kraftstofftanks (1) von Personenkraftwagen sichergestellt, dass bei einem Befüllvorgang des Tanks (1) mit Erreichen des maximalen Füllstandniveaus und somit mit einem Schließen der schwimmergesteuerten Ventilanordnung (6) aufgrund des relativ hohen Strömungswiderstands in der Ausgleichs-Entlüftungsleitung (10) zeitlich betrachtet nur eine derart geringe Luftmenge aus dem Volumenveränderungselement (2) in die Umgebung abgeführt werden kann, dass sich mit weiterer Zufuhr von Kraftstoff in den Kraftstofftank (1) in diesem bzw. in dessen Befüllrohr ein derart hoher Gegendruck einstellt, dass die übliche und bereits genannte Abschaltautomatik einer Tankzapfpistole aktiviert wird.

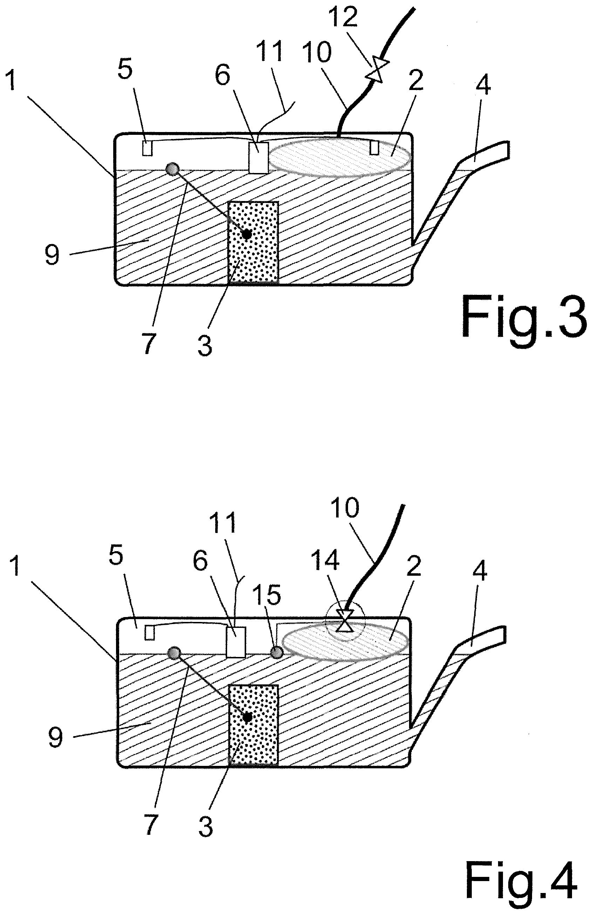

Eine weitere Maßnahme zur Eliminierung einer Einflussnahme des Volumenveränderungselements 2 auf das maximale Füllstandniveau wird nun anhand der beigefügten **Figur 3** erläutert, in welcher nur der Zustand während eines Befüllvorgangs des Kraftstofftanks 1 beim Erreichen des maximalen Füllstands, d.h. wenn die schwimmergesteuerte Ventilanordnung 6 schließt, dargestellt ist. Letzteres ist mittels eines üblichen Hebelgebers 7 bzw. allgemein mittels eines Füllstandsensors 7, welcher selbstverständlich wie üblich auch im Kraftstofftank 1 der Figuren 1, 2 vorgesehen aber dort der Einfachheit halber nicht dargestellt ist, von einer (nicht gezeigten) elektronischen Steuereinheit feststellbar. Vorliegend ist dieser schwimmergesteuerte Hebelgeber 7 an einem Schwalltopf 3 gelenkig angebunden, jedoch ist auch dies für die vorliegende Erfindung unerheblich. Wesentlich hingegen ist, dass in der Ausgleichs-Entlüftungsleitung 10 ein von der soeben genannten elektronischen Steuereinheit ansteuerbares Sperrventil 12 oder Drosselventil 12, allgemein ansteuerbares Ventil 12 genannt, vorgesehen ist. Wenn während eines Befüllvorgangs des Kraftstofftanks 1 die besagte elektronische Steuereinheit mittels des Füllstandsensors 7 (oder Hebelgebers 7) erkennt, dass das maximale Füllstandniveau erreicht ist, so schließt diese das ansteuerbare Ventil 12 in der Ausgleichs-Entlüftungsleitung 10 zumindest soweit, dass nur mehr so wenig (hierbei wird das im vorstehenden Absatz erläuterte Prinzip genutzt) oder überhaupt keine Luft aus dem Volumenveränderungselement 2 in die Umgebung abgeführt werden kann, (so) dass sich mit weiterer Zufuhr von Kraftstoff in den Kraftstofftank 1 in diesem bzw. in dessen Befüllrohr ein derart hoher Gegendruck einstellt, dass die übliche und bereits genannte Abschaltautomatik einer Tankzapfpistole aktiviert wird.

Unter Nutzung des gleichen Prinzips wie beim Ausführungsbeispiel von Fig.3 zeigt das nun erläuterte Ausführungsbeispiel nach Figur 4 ebenfalls nur im vollständigen befüllten Zustand ein anderes Ventil 14 in der Verbindung zwischen dem Ausgleichs-Volumen des Volumenveränderungselements 2 und der Umgebung, welches durch einen sich aufgrund des beim Befüllen ansteigenden Füllstand verlagernden Schwimmer 15 zumindest teilweise geschlossen wird. Hierbei handelt es sich um ein rein mechanisch arbeitendes bzw. betätigtes Ventil 14, welches sicherheitshalber eine geringe Leckage bzw. Undichtigkeit aufweisen kann. Dabei kann dieses Ventil 14 auch solchermaßen ausgelegt sein, dass dessen Durchflusswiderstand mit im Kraftstofftank 1 ansteigendem Füllstand veranlasst durch die Verlagerung des Schwimmers 15 kontinuierlich ansteigt.

## Patentansprüche

1. Tanksystem eines Kraftfahrzeugs mit einem im Innenraum des Kraftstofftanks (1) zumindest im Wesentlichen oberhalb des Flüssigkeitsspiegels vorgesehenen Volumenveränderungselement (2), welches ein mit der Umgebung in Verbindung stehendes Ausgleichsvolumen bildet,
wobei das Volumenveränderungselement (2) und eine Tankentlüftungsleitung (11) solchermaßen ausgelegt sind, dass das Dampfdruckgleichgewicht im Kraftstofftank (1) durch selbsttätige Zufuhr und Abfuhr von Umgebungsluft in das oder aus dem Volumenveränderungselement (2) soweit einhaltbar ist, dass die Tankentlüftungsleitung (7) geschlossen bleiben kann,
sowie mit einer der Tankentlüftungsleitung (11) zugeordneten Ventilanordnung (6),
**dadurch gekennzeichnet, dass** die Ventilanordnung (6) beim Befüllen des Kraftstofftanks (1) schwimmergesteuert schließt und damit ein maximales Füllstandniveau im Kraftstofftank (1) bewirkt, und dass ein Einfluss des Volumenveränderungselements (2) auf das maximale Füllstandniveau eliminiert ist, indem
a) das Volumenveränderungselement (2) solchermaßen im Kraftstofftank (1) angeordnet ist, dass sich bei auf horizontalem Untergrund stehendem Fahrzeug in Hochachsrichtung betrachtet die Oberseite des Volumenveränderungselements (2) nicht nennenswert oberhalb desjenigen Kraftstofffüllstandes befindet, bei welchem die besagte Ventilanordnung (6) schließt, und/oder
b) in der Verbindung zwischen dem Ausgleichsvolumen des Volumenveränderungselements (2) und der Umgebung ein Ventil (12) vorgesehen ist, welches dann, wenn der beim Befüllen ansteigende Füllstand das maximale Füllstandniveau erreicht hat, im Schließsinn angesteuert wird oder durch einen sich aufgrund des beim Befüllen ansteigenden Füllstand verlagernden Schwimmer (15) zumindest teilweise geschlossen wird.

2. Tanksystem nach Anspruch 1, wobei das Volumenveränderungselement (2) mit seiner Oberseite durch eine im Tank-Innenraum vorgesehene Rückhaltevorrichtung (13) daran gehindert ist, in Hochachsrichtung betrachtet nennenswert höher zu liegen als derjenige Kraftstofffüllstand, bei welchem die Ventilanordnung (6) schließt.

3. Tanksystem nach Anspruch 1, wobei der Kraftstofftank (1) solchermaßen geformt ist, dass in Hochachsrichtung betrachtet die Innenseite der oberen Tankwand dort, wo das Volumenveränderungselement (2) angeordnet ist, um ein ausreichendes Maß niedriger liegt als im Bereich der schwimmergesteuert schließenden Ventilanordnung (6).

## Claims

1. Tank system of a motor vehicle with a volume-modifying element (2) provided in the interior of the fuel tank (1) at least substantially above the liquid level, which volume-modifying element (2) forms a compensating volume which is connected to the surroundings,
wherein the volume-modifying element (2) and a tank ventilation line (11) are conceived in such a manner that the vapour pressure equilibrium in the fuel tank (1) is able to be maintained by automatically supplying and discharging ambient air into or out of the volume-modifying element (2) to such an extent that the tank ventilation line (7) can remain closed,
and having a valve arrangement (6) which is assigned to the tank ventilation line (11),
**characterized in that** the valve arrangement (6) closes in a float-controlled manner when filling the fuel tank (1) and thus brings about a maximum fill level in the fuel tank (1), and **in that** an influence of the volume-modifying element (2) on the maximum fill level is eliminated **in that**
a) the volume-modifying element (2) is arranged in the fuel tank (1) in such a manner that in the case of a vehicle standing on a horizontal surface, as seen in the vertical axis direction, the upper side of the volume-modifying element (2) is not located appreciably above that fuel fill level at which the stated valve arrangement (6) closes; and/or
b) there is provided in the connection between the compensating volume of the volume-modifying element (2) and the surroundings a valve (12) which, when the fill level increasing during filling has reached the maximum fill level, is actuated in the closing direction, or is at least partially closed by a float (15) which is displaced as a result of the fill level which rises during filling.

2. Tank system according to Claim 1, wherein the volume-modifying element (2) with its upper side is prevented by a retaining device (13) provided in the tank interior from lying appreciably higher as seen in the vertical axis direction than that fuel fill level at which the valve arrangement (6) closes.

3. Tank system according to Claim 1, wherein the fuel tank (1) is formed in such a manner that, as seen in the vertical axis direction, the inside of the upper tank wall, where the volume-modifying element (2) is arranged, lies lower to a sufficient degree than in the region of the valve arrangement (6) which closes in a float-controlled manner.

## Revendications

1. Système de réservoir d'un véhicule automobile comprenant un élément (2) de modification de volume prévu dans l'espace intérieur du réservoir de carburant (1) au moins essentiellement au-dessus du niveau du liquide, qui forme un volume d'équilibrage communiquant avec l'environnement,
l'élément (2) de modification de volume et une conduite (11) d'évent de réservoir étant conçus de telle sorte que l'équilibre de pression de vapeur dans le réservoir de carburant (1) puisse être maintenu par l'amenée et l'évacuation automatiques d'air ambiant dans ou hors de l'élément (2) de modification de volume, dans une mesure telle que la conduite (7) d'évent de réservoir puisse rester fermée,
ainsi qu'avec un agencement de vanne (6) associé à la conduite (11) d'évent de réservoir,
**caractérisé en ce que** l'agencement de vanne (6) se ferme par commande à flotteur lors du remplissage du réservoir de carburant (1) et provoque ainsi un niveau de remplissage maximal dans le réservoir de carburant (1), et **en ce qu'**une influence de l'élément (2) de modification de volume sur le niveau de remplissage maximal est éliminée par le fait que
a) l'élément (2) de modification de volume est disposé dans le réservoir de carburant (1) de telle sorte que, lorsque le véhicule est sur un sol horizontal, le côté supérieur de l'élément (2) de modification de volume, vue dans la direction de l'axe vertical, ne se trouve pas sensiblement au-dessus du niveau de remplissage de carburant auquel ledit agencement de vanne (6) se ferme, et/ou
b) dans la liaison entre le volume de compensation de l'élément (2) de modification de volume et l'environnement, il est prévu une vanne (12) qui, lorsque le niveau de remplissage croissant lors du remplissage a atteint le niveau de remplissage maximal, est commandée dans le sens de la fermeture ou est fermée au moins partiellement par un flotteur (15) qui se déplace en raison du niveau de remplissage croissant lors du remplissage.

2. Système de réservoir selon la revendication 1, dans lequel le côté supérieur de l'élément (2) de modification de volume est empêché, par un dispositif de retenue (13) prévu dans l'espace intérieur du réservoir, de se situer sensiblement plus haut, vu dans la direction de l'axe vertical, que le niveau de remplissage de carburant auquel l'agencement de vanne (6) se ferme.

3. Système de réservoir selon la revendication 1, dans lequel le réservoir de carburant (1) est formé de telle sorte que, vu dans la direction de l'axe vertical, le côté intérieur de la paroi supérieure du réservoir, là où est disposé l'élément (2) de modification de volume, se situe à un niveau suffisamment plus bas que dans la zone de l'agencement de vanne (6) à fermeture commandée par flotteur.
